# EUROPEAN PATENT APPLICATION

(11) **EP 4 832 498 A1**
(43) Date of publication of application: **28.10.2026**
(21) Application number: 25305588.3
(22) Date of filing: 24.04.2025
(51) Int. Cl.: H04N 21/81

(54) **METHOD TO SET UP A DIMINISHED REALITY EXPERIENCE**

(71) Applicant: InterDigital CE Patent Holdings, SAS, 75017 Paris (FR)
(72) Inventor: JOUET, Pierrick, 35000 RENNES (FR); LELIEVRE, Sylvain, 35760 MONTGERMONT (FR); HIRTZLIN, Patrice, 35830 BETTON (FR); FAIVRE D'ARCIER, Etienne, 35750 SAINT GONLAY (FR); FONTAINE, Loic, 35530 NOYAL SUR VILAINE (FR); MULARD, Julien Pierre Henri Philippe, 35000 RENNES (FR); LEROY, Bertrand, 35170 BRUZ (FR)
(74) Representative: Vossius & Partner Patentanwälte Rechtsanwälte mbB

(57) **Abstract**

In a method according to an example embodiment, an anchor data structure in a scene description file is decoded. A coordinate system is oriented in a real-world scene based on information in the anchor data structure. An object removal configuration data structure associated with the anchor data structure is decoded from the scene description file. Decoding the object removal configuration data structure includes decoding coordinates, in the coordinate system, of at least one volume. The real-world scene is processed to hide at least a portion of a first real-world object located within the at least one volume in an extended reality, XR, experience.

## Description

### BACKGROUND

The present disclosure relates to providing an augmented reality (AR) experience in which some real objects are hidden from the viewer's perspective. This experience may be referred to as diminished reality.

Diminished reality (DR) is a mechanism that hides reality components from the viewer's perspective. It is described, for example, in S. Mori et al. (2017), "A survey of diminished reality: Techniques for visually concealing, eliminating, and seeing through real objects," IPSJ Transactions on Computer Vision and Applications. 9. 10.1186/s41074-017-0028-1. Unwanted elements are recognized and replaced by other image elements, creating the illusion of having removed some real objects from the viewer's perspective.

### SUMMARY

Briefly stated, in one embodiment, a method comprises: decoding an anchor data structure in a scene description file; orienting a coordinate system in a real-world scene based on information in the anchor data structure; decoding an object removal configuration data structure associated with the anchor data structure, wherein decoding the object removal configuration data structure includes decoding coordinates, in the coordinate system, of at least one volume; and processing the real-world scene to hide at least a portion of a first real-world object located within the at least one volume in an extended reality, XR, experience.

In some embodiments, the object removal configuration data structure includes information indicating whether to perform shadow removal, and the method further comprises, in response to the information indicating that shadow removal is to be performed, processing the real-world scene to remove a shadow of the real-world object.

In some embodiments, the object removal configuration data structure further includes information indicating a format for identifying hidden objects, and the decoding of coordinates is performed in response to a determination that the format for identifying hidden objects is a format that includes volume information.

In some embodiments, the object removal configuration data structure further includes at least one object label, and the method further comprises processing the real-world scene to hide a second real-world object identified by the object label.

In some embodiments, the object removal configuration data structure is included in the anchor data structure.

In some embodiments, the object removal configuration data structure includes information indicating a frequency at which object removal is updated.

Some embodiments further include rendering and displaying the processed real-world scene.

A method according to some embodiments comprises: encoding an anchor data structure in a scene description file defining an extended reality, XR, experience; and encoding an object removal configuration data structure in the scene description file, the object removal configuration data structure being associated with the anchor data structure, the object removal configuration data structure including coordinates of at least one volume in which real-world objects are to be hidden, the coordinates defining a volume in a coordinate system based on the anchor data structure.

In some embodiments, the object removal configuration data structure includes information indicating whether to perform shadow removal of removed real-world objects.

In some embodiments, the object removal configuration data structure further includes information indicating a format for identifying hidden objects, and the method further comprises encoding an indication that the format for identifying hidden objects is a format that includes volume information.

Some embodiments further comprise encoding at least one object label in the object removal configuration data structure.

In some embodiments, the object removal configuration data structure is included in the anchor data structure.

Further embodiments include an apparatus comprising one or more processors configured to perform any of the methods described herein.

Further embodiments include a signal comprising a scene description files encoded according to any of the methods described herein.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.
FIG. 1 is a flow chart of a method in which a scene description file is decoded and processed according to an example embodiment.
FIGs. 2A-2D schematically illustrate a scene that is processed according to an example embodiment.
FIG. 3 is a flow chart of a method in which a scene description file is decoded and processed according to an example embodiment.
FIG. 4 is a functional block diagram of an apparatus comprising one or more processors on which example embodiments may be implemented.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

### Overview of Diminished Reality (DR)

In-Painting-DR is a technique in which parts of scene are reconstructed or "painted over." This inpainting process uses information in the source image, such as textures and colors around the object or the area to be reduced. There are two common methods for removing targets from videos or images. The first one fills in the missing regions by using readily available background images or other information captured beforehand. The second one uses the information around the target or the similarity of textures to artificially produce the filling content (usually using some deep learning technique), an approach also known as image inpainting.

The segmented 3D model of a real scene can be used to select and mask target objects, as described in K. Kobayashi and M. Takahashi, "Real-Time Diminished Reality Application Specifying Target Based on 3D Region," Virtual Worlds 2024, 3, 115-134.

With the use of deep learning, it is also possible to select elements in an image, as described in R. Velastegui et al., "Image semantic segmentation of indoor scenes: A survey," Computer Vision and Image Understanding, Volume 248, 2024. The masked area is filled with background information, selected objects can then be hidden.

The inpainting of 3D regions of a real scene is now a well-known process, as described for example in K. Prabhu et al., "Inpaint3D: 3D Scene Content Generation using 2D Inpainting Diffusion," arXiv:2312.03869v1 [cs.CV] 6 Dec 2023. As one example, Neural Radiance Fields (NeRF) can be used to implement this process.

Inpainting 2D regions of a scene is also a well-known process. As one example, Fourier convolutions can be used, as described in R. Suvorov et al., "Resolution-robust Large Mask Inpainting with Fourier Convolutions," arXiv:2109.07161 [cs.CV]. As another example latent diffusion models (LDMs) can be used to implement this process, as described in R. Rombach, "High-Resolution Image Synthesis with Latent Diffusion Models," arXiv:2112.10752v2 [cs.CV] 13 Apr 2022.

The process of hiding/removing real elements can include the following processes: selection of real objects and creation of a visual mask for the object to hide; applying inpainting process to the masked areas; optionally removing shadows of the hidden objects; and rendering the diminished reality scene.

In cases where an object of a scene is hidden, the realism of the scene can be improved by also hiding the shadow of the hidden object. The shadow removal on an image (2D) is now a well-known process. For instance, Diffusion Models can be used to implement this process, as described in K. Mei et al., "Latent Feature-Guided Diffusion Models for Shadow Removal," arXiv:2312.02156 [cs.CV]. Knowledge of the 3D model of the real environment and real light parameters can help guide the shadow removal process, as described in E. Zhang et al., "No Shadow Left Behind: Removing Objects and their Shadows using Approximate Lighting and Geometry," arXiv:2012.10565 [cs.CV]. As shadows can originate from occlusions in direct illumination, it can be helpful to handle information about the related real light sources for the shadow removal process. When the shadow is detected the hiding of that shadow can be seen as an inpainting process. The process of removing shadows may include detecting and masking shadows associated with hidden objects, and applying an inpainting process to the masked areas.

A 3D model of a real environment can be used to check collisions and occlusions, and to correctly position shadows and virtual objects. The 3D model of a real scene can be extracted from images of the environment, captured by an RGB camera from different points of view, e.g. using structure from motion techniques. The labelling and segmentation may be performed from a textured mesh. It provides a segmented 3D model. In a segmented 3D model, each element or object can be accessed individually. As an example, using to the labelling of each object in a scene representing a room, all the chairs in the scene can be selected.

Semantic segmentation performs pixel-level labelling with a set of object categories (e.g., human, car, tree, sky) for all image pixels, as described for example in S. Minaee et al., "Image Segmentation Using Deep Learning: A Survey," arXiv:2001.05566v5 [cs.CV] 15 Nov 2020. In recent years, deep learning (DL) models have yielded a new generation of image segmentation models with remarkable performance improvements. Deep learning-based segmentation utilizes neural networks, such as convolutional neural networks (CNNs), to automatically identify and delineate objects or regions of interest within images.

### Overview of Scene Description and Anchoring

MPEG-I Scene Description is a standard developed by MPEG for immersive media. It defines the structure and composition of a 3D scene, referencing and positioning 2D and 3D assets in the scene, and provides information for proper rendering of the scene. Semantics already exist in gITF scene description language, e.g. MPEG-SD MPEG_anchorextension that can be used to specify where in the real world where virtual elements should be positioned. An anchor is a virtual element for which its position, orientation, scale and other properties are expressed in the trackable space defined by a trackable. A trackable, in turn, is a real-world object that can be tracked by the XR runtime. Each trackable provides a local reference space, also known as a trackable space, in which an anchor can be expressed. A virtual asset's position, orientation, scale and other properties are expressed in relation to an anchor. AR anchoring allows for anchoring of a scene or some root nodes of a scene into the user's physical environment to provide an AR experience. AR anchoring is supported at the scene level and at the node level, as well as with the use of an extension through the definition of the MPEG_anchor extension. The use of tracking and for AR/XR systems is described for example in 3GPP TS 26.119, "Device Media Capabilities for Augmented Reality Services (Release 18)," March 2024.

Once anchored, the elements of the scene may interact with the physical environment. The anchoring extension also specifies how the representation of this environment may be provided to manage these interactions and to reach expected AR experience.

In the MPEG_anchor extension, the values of the following parameters can be used to configure the construction or request elements of the spatial description: scanOptions, scanDetails, scanOccurence, scanVolumes, and realSemantic.

The following table provides a definition of an anchor object.

| **Name** | **Type** | **Usage** | **Default** | **Description** |
|---|---|---|---|---|
| trackable | integer | M | | Index of the trackable in the trackables array that will be used for this anchor. |
| requiresAnchoring | boolean | M | | Indicates if AR anchoring is used for the rendering of the associated nodes. |
| | | | | If TRUE, the application shall skip the virtual assets attached to this anchor until the pose of this anchor in the real world is known. |
| | | | | if FALSE, the application shall process the virtual assets attached to this anchor |
| minimumRequired Space | vec3 | O | (0,0,0) | Space used to anchor the AR asset (width, height, depth in meters). This space corresponds to an axis-aligned bounding box, placed at the origin of the trackable space. Width is aligned with x axis, height with y axis and depth with z axis, expressed in trackable local space. This value shall be compared to the bounding box of the real-world available space associated with the trackable as estimated by the XR runtime. |
| aligned | enumeration | O | NOT_USED | The aligned flag may take one of the following values: NOT_USED=0, ALIGNED_NOTSCALED=1, ALIGNED_SCALED=2. If ALIGNED_SCALED is set, the bounding box of the virtual assets attached to that anchor is aligned and scaled to match the bounding box of the real-world available space associated with the trackable as estimated by the XR runtime. |
| actions | array (number) | O | N/A | Indices of the actions in the actions array of the interactivity extension to be executed once the pose of this anchor is determined. An example is a setTransform action to place the virtual assets attached to that anchor. |
| light | integer | O | N/A | Reference to an item in the lights array of the MPEG_lights_texture_based extension. |
| recommended SpatialComputing Config | object | O | N/A | Provides a set of recommended parameters specifying the needed spatial description. |

As seen in the above table, the anchor object includes a recommendedSpatialComputingConfig object. The following table provides the semantics of the recommendedSpatialComputingConfig object.

### RecommendedSpatialComputingConfig Object

| **Name** | **Type** | **Usage** | | **Default** | **Description** |
|---|---|---|---|---|---|
| scanOptions | array | O | | N/A | Array of options (enumeration) for the scan computation: possible values are given in a table below. |
| scanDetails | object | O | | N/A | Specifies the desired level of detail for the representation. The semantics is presented in a table below. |
| scanUpdate | object | O | | N/A | Specifies the frequency at which the spatial description must be updated. This information may be provided in a format as shown in a table below. |
| scanVolumes | array | O | | N/A | Array of bounding volumes that determine the spaces where scanned objects must be provided. Real scan objects that intersect one or more of the bounding volumes should be provided, and all other objects ignored. The semantics for these volumes are presented in a table below. |
| realSemantic | array | O | | N/A | Semantic descriptions of nodes that are needed ("table", "room", "chair", "wall", "light", "freespace" ...) |
| lightOptions | array | O | | N/A | Array of options (enumeration) for the light extraction: possible values are given in a table below. |
| lightUpdate | object | O | | N/A | Specifies the frequency at which the extraction of real light is to be updated. This information may be provided in a format as shown in a table below. |

As seen in the above table, the RecommendedSpatialComputingConfig object may include a scanOptions item. The following table shows possible values of the scanOptions item

### Possible values for a scanOptions item

| **Enumeration value** | **Description** |
|---|---|
| PLANE = 0 | Request plane data for scanned objects |
| PLANAR_MESH | Request planar meshes for scanned objects |
| VISUAL_MESH | Request 3D visualization meshes for scanned objects |
| COLLIDER_MESH | Request 3D collider meshes for scanned objects |
| FREE_VOLUME | Request to get the available space around a trackable |
| BOUNDING_BOX | Request a simplified collider mesh |
| TEXTURED_MESH | Request mesh with a texture |

The RecommendedSpatialComputingConfig object may also include a scanDetail object. The following table shows semantics of the scanDetail object.

### Semantics for the scanDetail object

| **Name** | **Type** | **Usage** | **Default** | **Description** |
|---|---|---|---|---|
| primitivesNumber | number | O | N/A | Gives the quantity of geometric primitives per m3 |
| textureOption | enumera tion | O | LOW_RES | Gives the resolution of the texture of textured mesh. |
| | | | | Possible values are LOW_RES (0) or HIGH_RES(1). |

The RecommendedSpatialComputingConfig object may also include a scanUpdate or lightUpdate object. The following table shows semantics of a scanUpdate or lightUpdate object.

### Semantics of a scanUpdate or lightUpdate object

| **Name** | **Type** | **Usage** | **Default** | **Description** |
|---|---|---|---|---|
| occurrence | enumeratio n | O | ONCE | An occurrence value: |
| | | | | - ONCE = 0: the update is performed only once, for instance in case of a static real scene, |
| | | | | - N_FRAME: the update is performed periodically, every N rendering frames, N depending on the dynamism of the real scene. The N value is provided in the frameNumber parameter. |
| | | | | - AUTO: the update frequency is managed by the module that compute the representation. This module may perform an analysis to detect significant changes in the real world and start an update This analysis may be performed from raw images data, like RGB images from a camera or depth images from a depth sensor. |
| numberOfFrames | number | O | N/A | Indicate the periodicity, in number of frames, of the update, when the occurrences value is N_FRAME. |

The RecommendedSpatialComputingConfig object may also include a scanVolumes item. The following table shows semantics of a scanVolumes item.

### Semantics for a scanVolumes item

| **Name** | | | **Type** | **Usage** | **Default** | **Description** |
|---|---|---|---|---|---|---|
| | type | | enumeration | M | | SPHERE=0, BOX, FRUSTUM |
| | If (type == SPHERE) | | | | | |
| | | center | array | M | | 3D coordinate of the center of the sphere |
| | | radius | number | M | | Radius of the sphere in meters. |
| | If (type == BOX) | | | | | |
| | | pose | matrix | M | | 4*4 matrix representing the center position and orientation of the box |
| | | extents | array | O | | Edge-to-edge length of the box along each dimension. |
| | If (type == FRUSTUM) | | | | | |
| | | pose | matrix | M | | 4*4 matrix representing the position and orientation of the tip of the frustum |
| | | fov | vec4 | M | | Angles of the four sides of the frustum |
| | | far | number | M | | Positive distance of the far plane of the frustum |
| | | near | number | M | | Positive distance of the near plane of the frustum |
| 3D coordinates are expressed in the XR space related to trackable associated to the anchor. | | | | | | |

The RecommendedSpatialComputingConfig object may also include a lightOptions item. The following table shows possible values of the lightOptions item.

### Possible values for a lightOptions item

| **Enumeration value** | **Description** |
|---|---|
| DirectionalLight = 0 | Request the extraction of directional lights |
| EnvLight | Request the extraction of environment lights |
| PointLight | Request the extraction of point lights |
| SpotLight | Request the extraction of spot lights |
| AreaLight | Request the extraction of area lights |

### Issues Addressed in Some Embodiments

For specific AR use cases, where virtual objects are integrated in the user's environment, it may be desirable to hide some parts of the real environment. This may be done, for instance, to position a virtual scene in a room without physically removing everything in it, or to position one or more virtual objects on a cluttered room with only a subset of real object (for instance a table).

A content creator may want to indicate to the AR application whether and how the real user's environment should be diminished to provide the best integration of its 3D virtual scene. The creator may wish do indicate, for example, which elements of the 3D real scene are to be hidden and/or which volume is to be cleared. It would be desirable to signal that information in the description of the virtual scene, e.g. in a MPEG-SD description file. The present disclosure describes systems and methods that make use of new parameters to be added in a scene description file that specify new features related to this diminished reality process. For the sake of explanation, this new semantics is described with reference to MPEG-SD, but example embodiments may alternatively be implemented using any other scene description languages.

### Overview of Example Embodiments

In a Diminished Reality (DR) experience, some real objects of the user's surroundings are hidden and replaced by a background element. DR allows, for instance, to empty a room without physically moving anything around. The systems and methods of the present disclosure may be used to set up a diminished reality experience based on dedicated semantics in a scene description file. Example methods include receiving and parsing a scene description file, identifying the metadata that lists real objects or indicate a volume to hide, and listing functions that are to be used for the experience.

Example embodiments make use of new semantics for a scene description file. This allows the scene designer to specify information such as which items of the real environment should be hidden and/or which volume of the real environment should be cleared and to provide parameters for the diminished reality process, such as parameters for shadow removal. The provided information can be used by a server or by user equipment (UE) to select and hide real objects and shadows.

In some embodiments, the diminished reality application may request the bounding box of the hidden object to handle the interaction of the user with the hidden object, e.g. to provide a warning to avoid collision.

Currently semantics already exist in scene description language, e.g. in the MPEG-SD MPEG_anchor extension, that specify an element of the real world where virtual elements should be positioned. In example embodiments, the information proposed in example embodiments may be added as new parameters in an existing extension such as MPEG_anchor extension, or as parameters of a new extension such as MPEG_node_real_to_hide other than the MPEG_anchor extension. For the sake of explanation, these semantics are described herein with respect to the gITF format, they may alternatively be used in any other description format, such as USD or FBX.

In some embodiments, to identify real objects in a scene description file, labels may be used (e.g., "table", "chair" and the like). This may be done in cases where the real scene has been segmented and labeled.

In some embodiments, one or more labels are provided to identify those real objects that will be displayed, and in response, the remaining objects are hidden. This may be expressed as follows: $\left[ObjectsToHide\right] = \left[AllObjectsOfTheScene\right] - \left[displayedObjects\right]$

In other embodiments, one or more labels are provided to expressly identify those real objects that will be hidden.

In some embodiments, to identify real objects to be hidden, a volume can be specified, e.g. by using elementary primitives such as boxes, spheres, and the like. The volume will be positioned relative to the trackable of the anchor object.

In some embodiments, additional parameters may be included for the diminished reality process. Such parameters may include, for instance, parameters related to shadow removal. Shadows associated with hidden objects may be removed to improve the experience. In that case, a shadow removal function will be employed. A Boolean can be used (such as "ShadowRemovalRequired") to indicate whether shadow removal is performed.

In some embodiments, only a subset of shadows associated with hidden objects is removed. To identify this subset, labels can be used to identify objects whose shadow are to be removed (or, conversely, to identify object whose shadow is not to be removed).

In some embodiments, the semantics described herein may be added as new parameters to the MPEG_anchor extension and to the semantic defined in document WG03_N01454_CDAM1_23090-14_amd1, "Text of ISO/IEC 23090-14 2nd edition CDAM 1: Support of MPEG-I immersive audio, scene understanding and other extensions."

Some embodiments make use of an additional object provided in an anchor object. The additional object may have a name such as RealObjectRemovalConfig. The additional object may include parameters such as a set of labels to identify the objects that will be removed. The set of labels may be referred to as "removedObjects." The additional object may identify a volume, which may be identified using elementary primitives. The additional object may include a parameter such as "ShadowRemovalRequired" is set to true when shadows are to be removed.

In the following tables, the value in the column Usage indicates whether the parameter is optional (O) or mandatory (M) for the particular implementation being represented. An indication that a parameter is mandatory under the syntax of a particular implementation does not mean that the parameter is mandatory for all implementations. Type defines the type of the parameter. Default is the default value.

The following table gives the semantics of an example anchor object that contains a new object: RealObjectRemovalConfig.

**Table 1 - Semantics of an Anchor object**

| **Name** | **Type** | **Usage** | **Default** | **Description** |
|---|---|---|---|---|
| trackable | integer | M | | Index of the trackable in the trackables array that will be used for this anchor. |
| requiresAnchoring | boolean | M | | Indicates if AR anchoring is used for the rendering of the associated nodes. |
| | | | | If TRUE, the application shall skip the virtual assets attached to this anchor until the pose of this anchor in the real world is known |
| | | | | if FALSE, the application shall process the virtual assets attached to this anchor |
| minimumRequired Space | vec3 | O | (0,0,0) | Space used to anchor the AR asset (x, y, z in meters). This space corresponds to an axis-aligned bounding box, placed at the origin of the trackable space and extending along the positive x+,y+, and z+ axes, expressed in the trackable local space. This value shall be compared to the bounding box of the real-world available space associated with the trackable as estimated by the XR runtime. |
| aligned | enumeration | O | NOT_US ED | the aligned flag may take one of the following values: NOT_USED=0, ALIGNED_NOTSCALED=1, ALIGNED_SCALED=2. |
| | | | | If ALIGNED_SCALED is set, the bounding box of the virtual assets attached to that anchor is aligned and scaled to match the bounding box of the real-world available space associated with the trackable as estimated by the XR runtime. |
| actions | array(number) | O | N/A | Indices of the actions in the actions array of the interactivity extension to be executed once the pose of this anchor is determined. An example is a setTransform action to place the virtual assets attached to that anchor. |
| light | integer | O | N/A | Reference to an item in the lights array of the MPEG_lights_texture_based extension. |
| SpatialComputing Config | Object | 0 | N/A | Provides a set of parameters specifying the needed spatial description. The semantics of this object is given in tables above. |
| RealObjectRemoval Config | Object | O | N/A | Provides a set of parameters giving information to remove real objects. |
| | | | | Example semantics of this object is given in Tables 3 and 5. |

The following table gives example semantics of the RealObjectRemovalConfig object included in the anchor object described above.

**Table 3 - Semantics of an example RealObjectRemovalConfig object**

| **Name** | **Type** | **Usage** | **Default** | **Description** |
|---|---|---|---|---|
| ShadowRemovalRequired | bool | O | False | if true, shadows removal function is performed. In this case, when an object is removed, its shadow is removed too. |
| hiddenObjects | Enum | M | | {LABEL=0, DIMINISH_VOLUME} |
| If( hiddenObjects = LABEL){ | | | | |
| removedObjects | Array | M | | Set of labels. |
| removedObject | string | M | | label of objects to hide/remove during rendering process |
| } | | | | |
| If( hiddenObjects = DIMINISH_VOLUME){ | | | | |
| volumeToHide | | M | | The semantics may be the same as those for a scanVolumes item as given in tables above. |
| } | | | | |
| refreshOccurence | Enum | O | | Specifies the frequency at which the process is updated |
| If (refreshOccurrence = EVERY_N_FRAMES){ | | | | |
| N | Number | | | The value of N |
| } | | | | |
| If (refreshOccurrence = EVENT_BASED ){ | | | | |
| Event | ID | | | ID of the Event (used to trigger the refresh process) |
| } | | | | |

The following table provides potential values for the parameter refreshOccurrence.

**Table 4: Refresh Occurrence**

| **Refresh occurrence** | **Description** |
|---|---|
| NONE = 0 | Supposed to be static |
| EVERY_FRAME = 1 | Refresh every frame |
| EVERY_N_FRAMES = 2 | Refresh every N frame |
| EVENT_BASED = 3 | Refresh when an event occurs. The events are managed by the application. |

In some embodiments, items of "hiddenObjects" can be logically combined (e.g LABEL & DIMINISH_VOLUME). In that case, removedObjects and volumeToHide can be both defined. Preferably at least one of them is be set. The following table gives example semantics of the RealObjectRemovalConfig object in such an embodiment.

**Table 5: Semantics of an example RealObjectRemovalConfig object**

| **Name** | **Type** | **Usage** | **Default** | **Description** |
|---|---|---|---|---|
| ShadowRemovalRequired | bool | O | False | if true, shadows removal function is used. In this case, when an object is removed, its shadow is removed too. |
| removedObjects | Array | O | | Set of labels. |
| removedObject | string | O | | label of objects to hide/remove during rendering process |
| volumeToHide | | | | The semantics may be the same as those for a scanVolumes item as given in tables above. |
| refreshOccurence | Enum | O | | See Table 4. Specifies the frequency at which the process must be updated |
| If (refreshOccurrence = EVERY_N_FRAMES){ | | | | |
| N | Number | | | The value of N |
| } | | | | |
| If (refreshOccurrence = EVENT_BASED ){ | | | | |
| Event | ID | | | ID of the Event (used to trigger the refresh process) |
| } | | | | |

The following is an example of a gITF scene description file, in which the RealObjectRemovalConfig parameters are specified at the anchor level:

```
 {
    "scene" : 0,
    "scenes" : [
         {
             "name" : "Scene",
             "nodes" : [0,1,2,3],
             "extensions": {
             "MPEG_anchor": {
                      "anchors": [
                          {
                             "trackable": 0,
                             "requiresAnchoring ": true,
                             " SpatialComputingConfig ":
                                {"scanOptions":[VISUAL_MESH],
                                "scanDetails":{400},
                                "scanOccurence": ONCE,
                                "scanVolumes": [{BOX:
                                [1,0,0,0,0,1,0,0,0,0,1,0,0,0,0,1]}],
                                "realSemantic":["table"],
                                "lightOptions" :[DirectionalLight, EnvLight],
                                "lightExtractionOccurence": ONCE
                                },
                                " RealObjectRemovalConfig ":{
                                " ShadowRemovalRequired ": true,
                                " removedobjects":["chair"],
                                "refreshOccurence": NONE
                          }
                         ],
                 "trackables": [...]
               } ,
            }
     ...
    "extensionsUsed": [
         "MPEG_anchor
    ]
 }
```

When processing the extended reality scene description file, if a RealObjectRemovalConfig object is present, the presentation engine checks whether it supports the diminished reality process as specified in RealObjectRemovalConfig object. If not, it's up to the application to continue the parsing.

At runtime, the presentation engine may then hide real objects of the scene according to the parameters removedObjects or the specified volume volumeToHide. If the Boolean "shadowRemovalRequired" is equal to true, shadows of hidden objects will be removed.

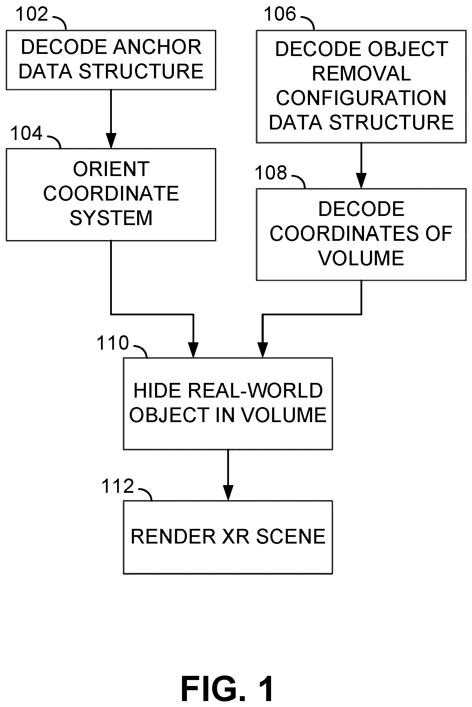

FIG. 1 is a flow diagram illustrating an example decoding method according to some embodiments. At 102, an anchor data structure in a scene description file is decoded, for example by an XR client device. At 104, the device orients a coordinate system in a real-world scene based on information in the anchor data structure. At 106, the device decodes an object removal configuration data structure. The object removal configuration data structure is associated with the anchor data structure, for example by being contained within the anchor data structure or by otherwise being linked (e.g. using an index or other information) with the anchor data structure. The decoding of the object removal configuration data structure may include decoding, at 108, coordinates of at least one volume, where the coordinates are expressed in the coordinate system defined by the anchor data structure. At 110, the real-world scene is processed to hide at least a portion of a first real-world object located within the at least one volume in an extended reality, XR, experience. At 112, the processed scene may be rendered, and the resulting scene may be provided to an XR display device for display.

In some embodiments, the object removal configuration data structure includes information indicating whether to perform shadow removal, e.g. using the ShadowRemovalRequired parameter described above or another parameter. In such cases, in response to the information indicating that shadow removal is to be performed, the processing of the real-world scene at 110 includes removing a shadow of the real-world object.

In some embodiments, the object removal configuration data structure further includes information indicating a format for identifying hidden objects. For example, this information may indicate whether hidden objects are identified based on labels, based on their position within a defined volume, or some combination of these or alternatives to these. One example is the hiddenObjects parameter described above, which indicates which format is used to identify hidden objects. According to one format, hidden objects are identified using an array of object labels. According to another format, hidden objects are identified using a volumeToHide data structure, which may include coordinates and other parameters using the same semantics as a scanVolumes item. Additional formats may alternatively be used, either individually or in combination (such as a Boolean combination). The decoding proceeds based on the format used to identify hidden objects. For example, in response to a determination that the format for identifying hidden objects is a format that includes volume information, the client device may proceed to decode coordinates (and potentially other parameters) that define the volume.

In some embodiments, the object removal configuration data structure includes at least one object label, either as an alternative or in addition to volume information. In some cases, the real-world scene is processed to hide a second real-world object identified by the object label. In alternative embodiments, the label is used to identify an object that is not hidden, and other objects not identified by the label are hidden.

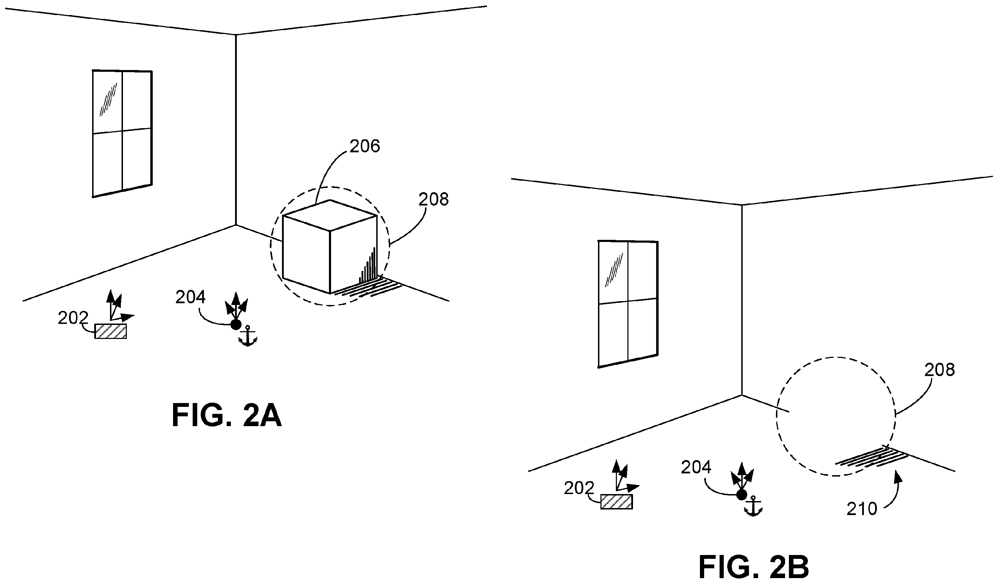

FIGs. 2A-2D schematically illustrate a scene that is processed according to an example embodiment. An XR application in this example calls for insertion of virtual content into the user's real environment and hiding of a real-world object, for example because the real-world object is positioned where it is desired to insert virtual content. Such an application may make use of the Anchor, Trackable and XR Space concepts as described in the 3GPP TS 26.119, Device Media Capabilities for Augmented Reality Services (Release 18). The scene in the example of FIG. 2A includes an anchor 204. Anchor is a virtual element having a position, orientation, scale and other properties that are expressed in a trackable space defined by a trackable 202. A virtual asset's position, orientation, scale and other properties are expressed in relation to the anchor. A trackable is a real-world object that can be tracked by the XR runtime. Each trackable provides a local reference space, also known as a trackable space, in which an anchor can be expressed. An XR Space is a frame of reference in which 3D coordinates are expressed.

In the example of FIG. 2A, the scene description file includes an anchor data structure that defines the anchor 204, which orients a coordinate system in the real-world scene. The scene description file also includes an object removal configuration data structure that includes coordinates of at least one volume 208 expressed in the coordinate system defined by the anchor data structure. As an example, it may be desired to insert a virtual object within the defined volume. Initially, however, in this example, a real-world object 206 happens to be located within the volume 208. Thus, as seen in FIG. 2B, the scene has been processed to remove the real-world object 206, e.g. using one or more of the object removal techniques cited above.

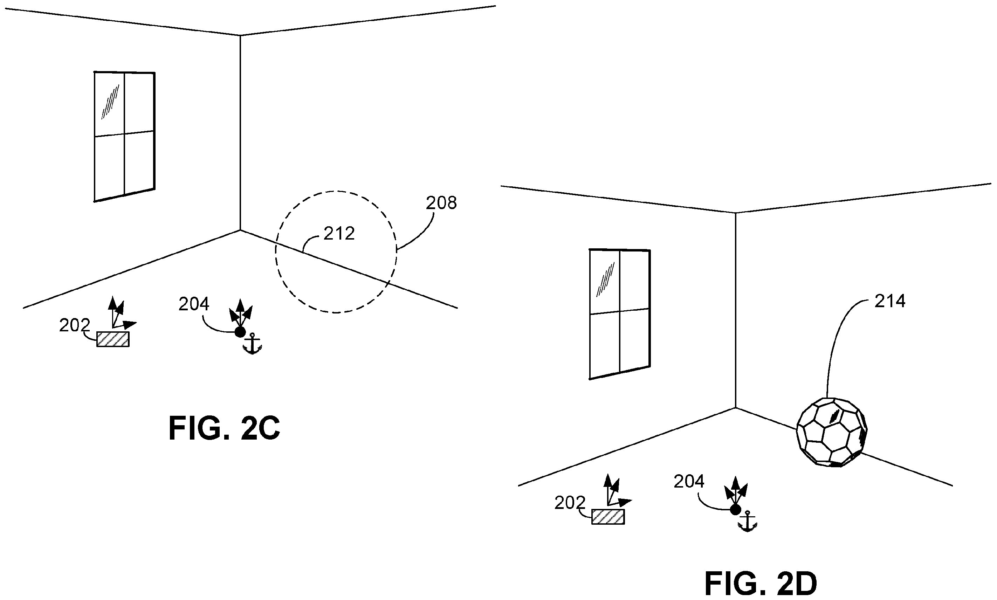

As seen in FIG. 2B, simple removal of object 206 may leave an unrealistic appearance, as the background is missing and a shadow 210 of the object now appears to have no source. Thus, as reflected in FIG. 2C, inpainting may be performed to estimate the appearance of and to restore background features such as the wall-floor seam 212. If the object removal configuration data structure indicates that shadow removal is to be performed, then the shadow 210 is also removed. In some embodiments, the goal of the XR experience may simply be to remove certain real-world objects (or real-world objects within a certain volume). In other embodiments, the scene description file may include information defining one or more virtual objects to be inserted in the real-world scene. FIG. 2D illustrates one such example, in which a virtual object 214 has been inserted in the scene in place of the real-world object 206 that has been hidden.

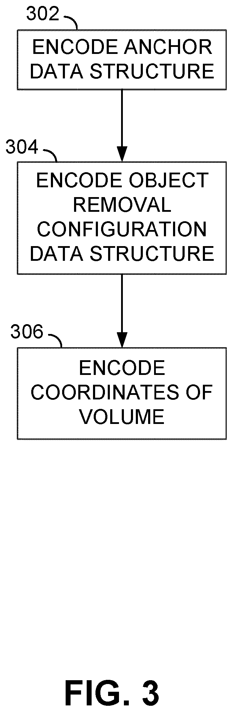

FIG. 3 is a flow diagram of an XR scene encoding method according to an example embodiments. At 302, an anchor data structure is encoded in a scene description file defining an extended reality, XR, experience. At 304, an object removal configuration data structure is encoded in the scene description file. The object removal configuration data structure is associated with the anchor data structure, for example by being contained within the anchor data structure. Encoding the object removal configuration data structure may include encoding, at 306, coordinates of at least one volume in which real-world objects are to be hidden, the coordinates defining a volume in a coordinate system based on the anchor data structure.

In some embodiments, encoding the object removal configuration data structure also includes encoding information indicating whether to perform shadow removal of removed real-world objects.

In some embodiments, the object removal configuration data structure further includes information indicating a format for identifying hidden objects, and the method includes encoding an indication that the format for identifying hidden objects is a format that includes volume information.

In some embodiments, the method further includes encoding at least one object label in the object removal configuration data structure.

### Example Systems

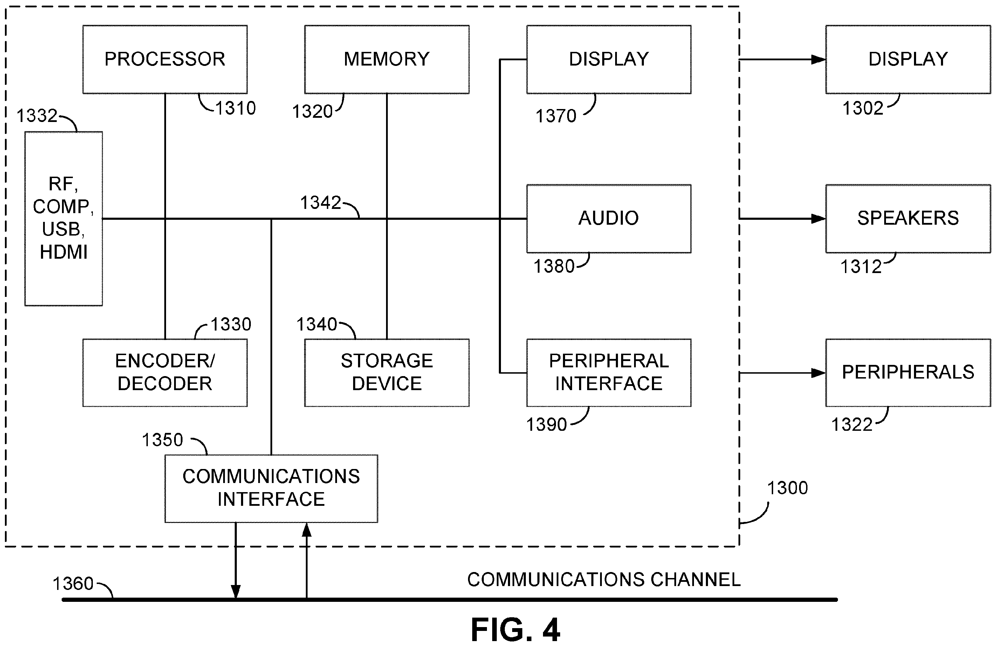

Some embodiments may be implemented on a system of one or more processors as illustrated in FIG. 4. FIG. 4 is a block diagram of an example of a system in which various aspects and embodiments are implemented. System 1300 can be embodied as a device including the various components described below and is configured to perform one or more of the aspects described in this document. Examples of such devices include, but are not limited to, various electronic devices such as personal computers, laptop computers, smartphones, tablet computers, digital multimedia set top boxes, digital television receivers, personal video recording systems, connected home appliances, and servers. Elements of system 1300, singly or in combination, can be embodied in a single integrated circuit (IC), multiple ICs, and/or discrete components. For example, in at least one embodiment, the processing and encoder/decoder elements of system 1300 are distributed across multiple ICs and/or discrete components. In various embodiments, the system 1300 is communicatively coupled to one or more other systems, or other electronic devices, via, for example, a communications bus or through dedicated input and/or output ports. In various embodiments, the system 1300 is configured to implement one or more of the aspects described in this document.

The system 1300 includes at least one processor 1310 configured to execute instructions loaded therein for implementing, for example, the various aspects described in this document. Processor 1310 can include embedded memory, input output interface, and various other circuitries as known in the art. The system 1300 includes at least one memory 1320 (e.g., a volatile memory device, and/or a non-volatile memory device). System 1300 includes a storage device 1340, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 1340 can include an internal storage device, an attached storage device (including detachable and non-detachable storage devices), and/or a network accessible storage device, as non-limiting examples.

System 1300 includes an encoder/decoder module 1330 configured, for example, to process data to provide an encoded video or decoded video, and the encoder/decoder module 1330 can include its own processor and memory. The encoder/decoder module 1330 represents module(s) that can be included in a device to perform the encoding and/or decoding functions. As is known, a device can include one or both of the encoding and decoding modules. Additionally, encoder/decoder module 1330 can be implemented as a separate element of system 1300 or can be incorporated within processor 1310 as a combination of hardware and software as known to those skilled in the art.

Program code to be loaded onto processor 1310 or encoder/decoder 1330 to perform the various aspects described in this document can be stored in storage device 1340 and subsequently loaded onto memory 1320 for execution by processor 1310. In accordance with various embodiments, one or more of processor 1310, memory 1320, storage device 1340, and encoder/decoder module 1330 can store one or more of various items during the performance of the processes described in this document. Such stored items can include, but are not limited to, the input point cloud, the decoded point cloud or portions of the decoded point cloud, the bitstream, matrices, variables, and intermediate or final results from the processing of equations, formulas, operations, and operational logic.

In some embodiments, memory inside of the processor 1310 and/or the encoder/decoder module 1330 is used to store instructions and to provide working memory for processing that is needed during encoding or decoding. In other embodiments, however, a memory external to the processing device (for example, the processing device can be either the processor 1310 or the encoder/decoder module 1330) is used for one or more of these functions. The external memory can be the memory 1320 and/or the storage device 1340, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 1300 can be provided through various input devices as indicated in block 1332. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples include composite video.

In various embodiments, the input devices of block 1332 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 1300 to other electronic devices across USB and/or HDMI connections. It is to be understood that various aspects of input processing, for example, Reed-Solomon error correction, can be implemented, for example, within a separate input processing IC or within processor 1310 as necessary. Similarly, aspects of USB or HDMI interface processing can be implemented within separate interface ICs or within processor 1310 as necessary. The demodulated, error corrected, and demultiplexed stream is provided to various processing elements, including, for example, processor 1310, and encoder/decoder 1330 operating in combination with the memory and storage elements to process the datastream as necessary for presentation on an output device.

Various elements of system 1300 can be provided within an integrated housing, Within the integrated housing, the various elements can be interconnected and transmit data therebetween using suitable connection arrangement 1342, for example, an internal bus as known in the art, including the Inter-IC (I2C) bus, wiring, and printed circuit boards.

The system 1300 includes communication interface 1350 that enables communication with other devices via communication channel 1360. The communication interface 1350 can include, but is not limited to, a transceiver configured to transmit and to receive data over communication channel 1360. The communication interface 1350 can include, but is not limited to, a modem or network card and the communication channel 1360 can be implemented, for example, within a wired and/or a wireless medium.

Data is streamed, or otherwise provided, to the system 1300, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1360 and the communications interface 1350 which are adapted for Wi-Fi communications. The communications channel 1360 of these embodiments is typically connected to an access point or router that provides access to external networks including the Internet for allowing streaming applications and other over-the-top communications. Other embodiments provide streamed data to the system 1300 using a set-top box that delivers the data over the HDMI connection of the input block 1332. Still other embodiments provide streamed data to the system 1300 using the RF connection of the input block 1332. As indicated above, various embodiments provide data in a non-streaming manner. Additionally, various embodiments use wireless networks other than Wi-Fi, for example a cellular network or a Bluetooth network.

The system 1300 can provide an output signal to various output devices, including a display 1302, speakers 1312, and other peripheral devices 1322. The display 1302 of various embodiments includes one or more of, for example, a touchscreen display, an organic light-emitting diode (OLED) display, a curved display, and/or a foldable display. The display 1302 can be for a television, a tablet, a laptop, a cell phone (mobile phone), or other device. The display 1302 can also be integrated with other components (for example, as in a smart phone), or separate (for example, an external monitor for a laptop). The other peripheral devices 1322 include, in various examples of embodiments, one or more of a stand-alone digital video disc (or digital versatile disc) (DVR, for both terms), a disk player, a stereo system, and/or a lighting system. Various embodiments use one or more peripheral devices 1322 that provide a function based on the output of the system 1300. For example, a disk player performs the function of playing the output of the system 1300.

In various embodiments, control signals are communicated between the system 1300 and the display 1302, speakers 1312, or other peripheral devices 1322 using signaling such as AV.Link, Consumer Electronics Control (CEC), or other communications protocols that enable device-to-device control with or without user intervention. The output devices can be communicatively coupled to system 1300 via dedicated connections through respective interfaces 1370, 1380, and 1390. Alternatively, the output devices can be connected to system 1300 using the communications channel 1360 via the communications interface 1350. The display 1302 and speakers 1312 can be integrated in a single unit with the other components of system 1300 in an electronic device such as, for example, a television. In various embodiments, the display interface 1370 includes a display driver, such as, for example, a timing controller (T Con) chip.

The display 1302 and speaker 1312 can alternatively be separate from one or more of the other components, for example, if the RF portion of input 1332 is part of a separate set-top box. In various embodiments in which the display 1302 and speakers 1312 are external components, the output signal can be provided via dedicated output connections, including, for example, HDMI ports, USB ports, or COMP outputs.

The embodiments can be carried out by computer software implemented by the processor 1310 or by hardware, or by a combination of hardware and software. As a non-limiting example, the embodiments can be implemented by one or more integrated circuits. The memory 1320 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1310 can be of any type appropriate to the technical environment, and can encompass one or more of microprocessors, general purpose computers, special purpose computers, and processors based on a multicore architecture, as non-limiting examples.

### Further Embodiments

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A method comprising:
decoding an anchor data structure in a scene description file;
orienting a coordinate system in a real-world scene based on information in the anchor data structure;
decoding an object removal configuration data structure associated with the anchor data structure, wherein decoding the object removal configuration data structure includes decoding coordinates, in the coordinate system, of at least one volume; and
processing the real-world scene to hide at least a portion of a first real-world object located within the at least one volume in an extended reality, XR, experience.

2. An apparatus comprising one or more processors configured to perform at least:
decoding an anchor data structure in a scene description file;
orienting a coordinate system in a real-world scene based on information in the anchor data structure;
decoding an object removal configuration data structure associated with the anchor data structure, wherein decoding the object removal configuration data structure includes decoding coordinates, in the coordinate system, of at least one volume; and
processing the real-world scene to hide at least a portion of a first real-world object located within the at least one volume in an extended reality, XR, experience.

3. The method of claim 1 or the apparatus of claim 2, wherein the object removal configuration data structure includes information indicating whether to perform shadow removal;
further comprising, in response to the information indicating that shadow removal is to be performed, processing the real-world scene to remove a shadow of the real-world object.

4. The method of claim 1, or claim 3 as it depends from claim 1, or the apparatus of claim 2, or claim 3 as it depends from claim 2, wherein the object removal configuration data structure further includes information indicating a format for identifying hidden objects, and wherein the decoding of coordinates is performed in response to a determination that the format for identifying hidden objects is a format that includes volume information.

5. The method of claim 1, or claims 3-4 as they depend from claim 1, or the apparatus of claim 2, or claims 3-4 as they depend from claim 2, wherein the object removal configuration data structure further includes at least one object label, further comprising processing the real-world scene to hide a second real-world object identified by the object label.

6. The method of claim 1, or claims 3-5 as they depend from claim 1, or the apparatus of claim 2, or claims 3-5 as they depend from claim 2, wherein the object removal configuration data structure is included in the anchor data structure.

7. The method of claim 1, or claims 3-6 as they depend from claim 1, or the apparatus of claim 2, or claims 3-6 as they depend from claim 2, wherein the object removal configuration data structure includes information indicating a frequency at which object removal is updated.

8. The method of claim 1, or claims 3-7 as they depend from claim 1, or the apparatus of claim 2, or claims 3-7 as they depend from claim 2, further comprising rendering the processed real-world scene.

9. The method of claim 1, or claims 3-8 as they depend from claim 1, or the apparatus of claim 2, or claims 3-8 as they depend from claim 2, further comprising displaying the processed real-world scene.

10. A method comprising:
encoding an anchor data structure in a scene description file defining an extended reality, XR, experience; and
encoding an object removal configuration data structure in the scene description file, the object removal configuration data structure being associated with the anchor data structure, the object removal configuration data structure including coordinates of at least one volume in which real-world objects are to be hidden, the coordinates defining a volume in a coordinate system based on the anchor data structure.

11. An apparatus comprising one or more processors configured to perform at least:
encoding an anchor data structure in a scene description file defining an extended reality, XR, experience; and
encoding an object removal configuration data structure in the scene description file, the object removal configuration data structure being associated with the anchor data structure, the object removal configuration data structure including coordinates of at least one volume in which real-world objects are to be hidden, the coordinates defining a volume in a coordinate system based on the anchor data structure.

12. The method of claim 10 or the apparatus of claim 11, wherein the object removal configuration data structure includes information indicating whether to perform shadow removal of removed real-world objects.

13. The method of claim 10, or claim 12 as it depends from claim 10, or the apparatus of claim 11, or claim 12 as it depends from claim 11, wherein the object removal configuration data structure further includes information indicating a format for identifying hidden objects, further comprising encoding an indication that the format for identifying hidden objects is a format that includes volume information.

14. The method of claim 10, or claims 12-13 as they depend from claim 10, or the apparatus of claim 11, or claims 12-13 as they depend from claim 11, further comprising encoding at least one object label in the object removal configuration data structure.

15. The method of claim 10, or claims 12-14 as they depend from claim 10, or the apparatus of claim 11, or claims 12-14 as they depend from claim 11, wherein the object removal configuration data structure is included in the anchor data structure.
